# EUROPEAN PATENT SPECIFICATION

(11) **EP 4 524 511 B1**
(45) Date of publication and mention of the grant of the patent: **29.04.2026**
(21) Application number: 23197642.4
(22) Date of filing: 15.09.2023
(51) Int. Cl.: G01B 11/24, G05B 19/4065, B23Q 17/24

(54) **A METHOD AND APPARATUS FOR TOOL CONDITION MEASUREMENT**
VERFAHREN UND VORRICHTUNG ZUR WERKZEUGZUSTANDSMESSUNG
PROCÉDÉ ET APPAREIL DE MESURE DE L'ÉTAT D'UN OUTIL

(43) Date of publication of application: 19.03.2025
(73) Proprietor: Renishaw PLC, Wotton-under-Edge, Gloucestershire GL12 8JR (GB)
(72) Inventor: MERRIFIELD, Benjamin James, Wotton-under-Edge Gloucestershire, GL12 8JR (GB); MAXTED, Paul, Wotton-under-Edge Gloucestershire, GL12 8JR (GB)
(74) Representative: Dunn, Paul Edward

(56) References cited:
- EP-B1- 3 679 318
- WO-A1-2005/085753
- US-A1- 2018 297 166

## Description

The present invention relates to a method and apparatus for measuring the condition of a cutting tool, and in particular to a method of using a non-contact tool setting apparatus for in-process measurement of a helical cutting tool mounted in the spindle of a machine tool.

A variety of techniques are known for measuring the cutting tools that are held in the spindle of a machine tool for cutting workpieces.

US6496273 describes tool setting apparatus mountable to a machine tool in which a beam of light is passed from a light source to a light detector. Interruption of the light beam by a tool is detected and used to measure the position of a point on the surface of the tool. Repeating the measurement allows different positions on the tool edge to be measured, which allows various cutting tool properties (such as tool length and/or tool diameter) to be measured. DE 102013 011 307 A1 and DE 195 28 376 A1 describe variants of such a break-beam tool setting apparatus. US 2018/0297166 A1 describes a method for assessing a condition of a cutting tool having a plurality of helical cutting edges using a light emitting section cooperating with two lines sensors in order to determine the positions of the plurality of helical edges at one longitudinal position of the cutting tool and compare said positions with predetermined nominal positions in order to determine defects of the cutting edges at these longitudinal positions.

EP3679318 describes how tool profiles can also be measured using a non-contact tool setting apparatus which traces a light beam around the periphery of a tool. This technique allows many more points around a tool periphery to be measured than the point-by-point measurement techniques described in US6496273.

It is also known to measure cutting tools before they are installed in a machine tool using a "tool pre-setter" of the type sold by E. Zoller GmbH & Co., Pleidelsheim, Germany. Apparatus for the inspection of cutting tools during their initial manufacture, rather than during their working lifetime, is also known. Such apparatus includes the LaserUltra system sold by the ANCA Group, Bayswater North, Victoria, Australia and the Laser Contour Check system sold by Walter Maschinenbau GmbH, Tübingen, Germany.

According to a first aspect of the present invention, there is provided a method for assessing a condition of a helical cutting tool having at least a first helical edge, the helical cutting tool being installed in a spindle of a machine tool for cutting features in a workpiece, the machine tool comprising a non-contact tool setting apparatus having a transmitter for emitting a light beam and a receiver for receiving the light beam, the receiver generating a beam intensity signal describing the intensity of received light, the method comprising the steps of:
(i) measuring a position of one or more points on the first helical edge,
(ii) using the measurements of step (i) to determine the translational and rotational motion of the helical cutting tool relative to the light beam that is required to trace the light beam along the first helical edge,
(iii) imparting the translational and rotational motion calculated in step (ii) to thereby trace the light beam along the first helical edge,
(iv) collecting beam intensity data describing the beam intensity signal that is generated by the receiver as the light beam is traced along the first helical edge during step (iii), and
(v) using the beam intensity data collected in step (iv) to assess the condition of the first helical edge.

The present invention thus relates a method of assessing a condition of a helical cutting tool when that tool is installed in the spindle of a machine tool in which it has, or will be, used to perform a cutting operation on a workpiece. In other words, the method relates to the "in-process" or "on-machine" measurement of the condition of a helical cutting tool. The machine tool, which may also be called a metal cutting machine, holds and rotates the helical cutting tool during such a cutting operation. The machine tool may, for example, be a milling machine, a mill-turn machine, a five-axis milling machine, a machining centre etc. The machine tool may comprise a computerised numerical controller (CNC), or controller for short, to control the motion axes of the machine tool.

The machine tool has a non-contact tool setting apparatus installed to allow measurement of the helical cutting tool. In particular, the non-contact tool setting apparatus mounted to the machine tool comprises a so-called break-beam tool setter in which a light beam is generated by a transmitter and passed to a receiver that generates a beam intensity signal describing the intensity of received light. Obscuration of the light beam by a tool reduces the amount of received light thereby allowing tool measurements. The output of the receiver may be collected and stored as beam intensity data that comprises a series of beam intensity data values.

The helical cutting tool measured in accordance with the present invention has at least a first helical edge. The first helical edge may be an edge of a tooth of the tool. The first helical edge may extend continuously or non-continuously along the tool in a generally helical manner. It should be noted that a so-called twisted or spiral edge is also an example of such a helical edge; i.e., a helical edge is an edge that changes in rotational position as it extends along the length of the cutting tool. As explained below, the helical cutting tool may have further (e.g., second, third etc) helical edges and optionally these helical edges could also be measured. At least a portion of the first helical edge may provide a cutting edge (i.e., to engage and cut material) and a portion of the first helical edge may not directly contact the workpiece but may instead be provided to aid removal of material (chips, swarf etc) from the cutting edge. The helical cutting tool may be a fluted cutting tool. The first helical edge may be part of a tooth; e.g., it may be the helical edge of one tooth of a fluted cutting tool.

Step (i) of the method comprises measuring the position of a point or a plurality of points on the first helical edge. As explained below, this step could comprise using the non-contact tool setting apparatus to perform a measurement (e.g., a rotational skip measurement) to establish the angular position of the first helical edge on the spindle axis. If multiple points are measured, these measurements could be taken at different positions along the length of the tool. Step (i) may also comprise taking additional measurements of the helical cutting tool, such as measurements of tool length or tool diameter, to allow the tool to be appropriately positioned in the light beam or to enable the measured angular position of points to be tied to positions along the length of the tool.

The measurements taken in step (i) are used in step (ii) to determine the translational (e.g., x,y,z) and rotational (e.g. Θ) motion of the helical cutting tool relative to the light beam that is needed to trace the light beam along the first helical edge. As explained below, such calculations may conveniently involve using a parameterised model of the helical cutting tool. For example, if the angular position of a point on the first helical edge is known along with the helix angle of the tool it is possible to calculate the translational and rotational motion that would cause the light beam to be traced along a path that nominally follows the first helical edge. This step (ii) may output a tool start position (e.g., a lateral position in x, y and z coordinates and an angular position of the tool relative to the light beam) along with a translational feed rate and an associated rate of angular rotation of the spindle. This step (iii) may conveniently be performed by the machine tool controller.

Step (iii) comprises causing the machine tool to implement the translational and rotational motion needed to trace the light beam along the (nominal) first helical edge. This step (iii) may be actioned by the machine tool controller using a series of movement commands (so-called G-codes) that include parameters that are calculated in step (ii). For example, coordinated motion or contour control (CS) functions (e.g., G05, G08 etc) could be used to impart the required motion. It should be noted that the imparted axis motions necessary to trace the light beam along the first helical edge may vary between machine tools that have different movement axes. In the examples provided below, the machine tool allows translation along three mutually orthogonal axis (x, y, z) whilst the spindle can be rotated into different rotational angles (Θ). There may, however, be fewer axes of translation (e.g., there may only be two axes of lateral or translational motion) or additional axes of rotation (e.g., the spindle may be held by a rotatable head). It should also be noted that it may not be necessary to use all of the machine tool axes of motion during step (iii). For example, translational motion may only be required along one or two axes of a three-axis machine tool to trace the light beam along the first helical edge. Any machine tool axis motions are preferably coordinated (e.g., synchronised). It is also preferred that the motion of the light beam along the first helical edge is continuous. Alternatively, dwells or pauses could be provided. The synchronised rotational and translation motion together causes the first helical edge to remain within the light beam as the light beam is moved along the length of the tool (i.e., the cutting tool is not rotated at high cutting speeds which would cause the helical edge to move into and out of the light beam on each rotation). The motion may be calculated in step (ii) before the machine tool started moving in accordance with step (iii). Alternatively, the motion of step (iii) may be started whilst later parts of the motion are still being calculated in step (ii).

Step (iv) comprises collecting a series of beam intensity data values, collectively termed the beam intensity data, whilst the light beam is being traced along the first helical edge in step (iii). The rate of collection or sampling of the beam intensity signal will define the resolution or permissible speed of the tool edge measurement. A higher sampling rate can provide higher positional resolution or allow faster movement of the light beam along the first helical edge. A lower sampling rate allows lower cost electronics and/or data processing to be used.

In a preferred embodiment, the sampling interval may be less than 100 milliseconds, more preferably less than 10 milliseconds, more preferably less than 1 millisecond or more preferably less than 100 microseconds. For a given speed of light beam motion along the first helical edge, the shorter the sampling interval (i.e., the higher the sampling rate) the higher the positional resolution of the acquired measurements. In a preferred embodiment, a beam intensity data value can be collected about every micron along the first helical edge. The collection of beam intensity data may be performed using an analogue-to-digital converter (ADC). The beam intensity data may be output as a series of beam intensity data values to an external computer, a processing unit of the tool setter interface and/or to the controller of the machine tool.

The analysis of step (v) uses the collected beam intensity data to assess tool condition. Step (v) may comprise establishing a deviation of the first helical edge from nominal or from a previous measurement. The analysis may comprise identifying characteristic features (e.g., peaks or troughs) in the collected beam intensity data. For example, this may allow chips or material build-up on the first helical cutting edge to be identified. The analysis may involve detecting tool wear. The analysis may comprise a comparison to previous measurements of the same first helical edge of the same tool, or a nominally identical tool. The tool analysis assessment may comprise automated analysis, or it may comprise presenting data visually to allow an operator to assess tool condition. Unlike techniques that use a rotating tool, all the data collected during step (iv) is taken as the light beam moves along the first helical edge. There may thus be no need to discard (e.g., filter out) unwanted data. Alternatively, the analysis of step (v) may be performed on a subset of the beam intensity data that is collected from certain regions of interest along the first helical edge. Similarly, step (iv) may comprise only collecting beam intensity data for one or more regions of interest along the first helical edge.

The method of the present thus provides a technique for quickly and reliably making in-process measurements to check the condition of the helical cutting tool. The frequency at which a tool edge is checked for wear or damage can thus be increased compared with prior art techniques and the resolution of the measurements can be higher, thereby reducing the chances of a damaged or worn tool being used to fabricate components not meeting the required specifications. The in-process tool condition assessment method of the present invention and its associated advantages are not mentioned in any of the above-referenced prior art citations.

Advantageously, step (i) comprises using the non-contact tool setting apparatus to measure an angular position of the one or more points on the first helical edge. As mentioned above, the angular position of the first helical is measured as an angle about the rotational axis of the spindle. In other words, the angular position may be measured in the angular coordinate system (Θ) of the machine tool spindle. If a plurality of points on the first helical edge are measured, these may be at different locations along the longitudinal axis of the tool. In this manner, the angular position needed to locate the first helical edge in the light beam at multiple positions along the tool may be found.

In a preferred embodiment, step (i) may comprise performing a so-called rotational skip measurement to determine the angular position of each of the one or more points on the first helical edge. Each rotational skip measurement (i.e., for each of the one or more points on the first helical edge) may comprise a step of (a) translating the helical cutting tool into a position relative to the light beam where rotation of the spindle alone moves the point on the first helical edge into and out of the light beam. Step (a) may also comprise performing a tool length or tool diameter measurement to allow the helical cutting tool to be appropriately located relative to the light beam. Such tool length or diameter measurements may be performed in a conventional manner, with the tool rotating at a typical cutting speed. Each rotational skip measurement may also comprise a step of (b) rotating the spindle and measuring the rotational angle of the spindle at which the beam intensity signal crosses a predetermined threshold. Step (b) is preferably performed with no lateral motion of the tool relative to the light beam (i.e., using spindle rotation alone). The rotational speed in step (b) may be lower (e.g., by at least an order of magnitude) than the speed of tool rotation during a workpiece cutting process.

If a single point on the first helical edge is known, then it is possible to calculate a nominal path to be traced along the first helical edge if the helix angle is known. Advantageously, step (i) comprises measuring the angular position of a plurality of points on the first helical edge. Conveniently, the plurality of points on the first helical edge are longitudinally spaced apart along the helical cutting tool. By measuring multiple points on the first helical edge it is possible to generate a nominal path that is more likely to correctly follow the first helical edge, even if the helix angles deviates slightly from nominal. It would also be possible to calculate the helix angle if sufficient points were measured on the first helical edge.

As mentioned above, other measurements of the helical cutting tool may be used to help define the location of the first helical edge. Advantageously, step (i) comprises using the non-contact tool setting apparatus to measure a length or diameter of the helical cutting tool. In this manner, angular positions of the first helical edge may be linked to a position along the tool. For example, the angular position of the helical edge may be measured as a function of the distance of that point from the tool tip.

Step (ii) may derive the translational and rotational motion required to trace the light beam along the first helical edge in a variety of ways. For example, if the helix angle is known and the position of one point on the first helical edge has been measured, it would be possible to calculate the required translational and rotational motion. In a preferred embodiment, step (ii) may comprise inputting the position measurements of step (i) into a parameterised cutting tool model. Information on the nominal helix angle of the tool may be assumed by such a model. The parameterised cutting tool model may be used to generate machine tool motion commands that, when executed by the machine tool, will impart the translational and rotational motion of the helical cutting tool relative to the light beam that is required to trace the light beam along the first helical edge. The use of a parameterised cutting tool model simplifies the calculations required. This can, for example, allow step (ii) to be performed by the numerical controller of the machine tool. The output of step (ii) may be an initial lateral spindle position (e.g., x, y, z) and a spindle orientation angle (Θ). The output of step (ii) may also comprise a translation feed rate (e.g., a z-axis feed rate) and an associated rate of spindle rotation that are required to trace the light beam along the first helical edge. Defining the starting position and orientation of the spindle, plus the rate of tool translation and rotation, allows the light beam to be traced along the first helical edge.

Advantageously, the translational motion is synchronised with the rotational motion in step (iii). In other words, the translational and rotational motions imparted in step (iii) are synchronised. The changes in lateral position (e.g., movements of the tool relative to the light beam in x, y, z) are thus synchronised with the rotational motion of the spindle. This means that even if the overall speed is altered, the laser beam remains on the first helical edge. Step (iii) is preferably implemented by supplying appropriate synchronous motion commands to the numerical controller which then implements the required synchronous machine tool axis motions. The motion control function of the numerical controller of the machine tool are thus used to ensure the required path of the light beam is traced along the tool.

Conveniently, step (iii) comprises imparting continuous translational and rotational motion. In other words, it is preferred that the light beam is traced along the first helical edge without pausing or dwelling. For example, the light beam may pass along the first helical edge at a substantially constant speed. The required motion may be pre-programmed prior to being executed; e.g., a suitable set of motion control commands (G-codes) may be loaded into the numerical controller and then executed. Preferably, the first helical edge does not leave the light beam during step (iii). Although continuous motion is preferred, dwells or pauses could be implemented. It is also preferred that the translational motion always includes a component parallel to the longitudinal axis of the helical cutting tools. For example, if the cutting tool lies on the z-axis then there is preferably translational motion along the z-axis (i.e., a non-zero feed rate in the z-direction) during step (iii). The machine tool may, depending on its configuration, also impart other components of translational or rotational motion to ensure the light beam is traced along the first helical edge.

Advantageously, step (v) comprises the steps of converting beam intensity data into edge deviation data. For example, voltage variations in the beam intensity data could be converted into edge deviations measurements (e.g., in microns, or millimetres etc) using the results of a prior calibration process. For simplicity, a linear conversion may be applied to give an approximate edge deviation measurement from the raw beam intensity data values. The beam intensity data may comprise a series of beam intensity data values collected at known time intervals. If the speed at which the laser beam was moved along the helical edge is known, each collected beam intensity data value can be tied to a position along the helical edge. If the light beam was traced along the helical edge at a constant speed, the conversion to a position along the tool can be readily calculated. It would also be possible to associate the beam intensity data values with positional information output by the machine tool. In other words, each beam intensity data value could be associated with the machine position at the time that beam intensity data value was collected. In this manner, any variation in the speed or light beam path would be taken into account, which can help to provide the user with information on the approximate size of any deviations in the profile of the helical edge. A user may then be able to infer defect size as part of the tool condition assessment of step (v).

In a preferred embodiment, step (v) may comprise comparing the beam intensity data collected in step (iv) with corresponding beam intensity data collected previously for the first helical edge of the same helical cutting tool. A comparison of the collected beam intensity data with a nominally identical reference tool would also be possible. The profile of the first helical edge may thus be compared with a previous (e.g., new or unused) profile measurement of that same helical edge. Alternatively, the profile of the first helical edge may be compared with a profile measurement of a nominally identical reference tool. This may be a direct comparison (e.g., by comparing sets of beam intensity data) or an indirect comparison (e.g,, by comparing edge deviation data collected at different times). An indication of tool wear, tool damage and potential tool lifetime may thus be provided.

Advantageously, step (v) comprises analysing the collected beam intensity data for localised changes in beam intensity to determine the presence of defects along the first helical edge. These may be localised changes that differ to those measured previously. Such an analysis allows chips or other damage to the first helical edge to be detected. Similarly, any build-up of excess material (condition-on) on the tool can be detected. The density of beam intensity data values collected in step (iv), along with the beam dimensions, will affect the resolution of the defect size and shape that can be extracted in step (v). A high density of beam intensity data values will typically provide high resolution measurements, but it does require more data to be collected and processed which may slow down the measurement procedure. Multiple passes along the first helical edge may also be used. For example, the light beam may be traced up and then down the first helical edge. The first helical edge may also be cleaned (e.g., using an air-blast or a tool washing procedure) between passes of the light beam. Such a cleaning step may be performed as a recovery action if the collected beam intensity data has unexpected characteristics or there is a large deviation from previous measurements of the same helical cutting tool. Multiple passes along the first helical edge can also be used to ensure any blind periods or interference due to coolant drips etc do not degrade measurement performance.

The present method may be applied to any helical cutting tool. The helical cutting tool may be an elongate cutting tool. The helical cutting tool may be rotatable about its longitudinal axis (or tool centreline) by the spindle. The helical cutting tool may comprise, for example, a milling cutter, an end mill, a ball end mill, a twist drill, a chamfer cutter or a hedgehog cutter. The first helical edge may include a continuous helical edge. The first helical edge may include a noncontinuous helical edge. For example, there may be chip breaks provided along the helical edge (e.g., to aid cutting debris removal) or there may be multiple cutting elements arranged in a helical pattern (e.g., hedgehog cutter). The helical cutting tool may have a plurality of helical edges having the same helix angle. The first helical edge may be formed from a plurality of helical sections. The helical sections forming the first helical edge may have different helix angles. As would be understood by a person skilled in the art, the helix angle is the angle formed by a line tangential to the angle of the flute and the centreline. The helical cutting tool may comprise non-helical sections as well as helical sections. The helical cutting tool may be rotated at a first speed during cutting and a second speed during step (iii) of the method, with the second speed being less than the first speed (e.g., by an order or magnitude or more). However, the measurements of step (iii) may also be implemented at high rotational speeds if the data collection of step (iv) can also operate at sufficiently high rates.

Advantageously, the helical cutting tool comprises at least one further helical edge. For example, the helical cutting tool may comprise a plurality of teeth that each have a helical edge. Steps (i) to (v) may then be repeated for each further helical edge. A helical cutting tool may thus be measured that has a plurality of helical edges. The different helical edges may be measured one after another. For example, the condition of the first helical edge may be assessed before repeating that assessment on each of the further helical edges in turn. The helical cutting tool may comprise a plurality of helical edges that have the same helix angle. Alternatively, the helix angles of the different helical edges may be different. The angular spacing between the helical edges may be uniform, but it could also be non-uniform. The helix angle of each helical edge may vary along the helical cutting tool. The helical cutting tool may also comprise a first portion having a positive helix angle and a second portion having a negative helix angle. In other words, the present method may be applied to any type of cutting tool having one or more helical edges.

As mentioned above, the present method is implemented with the helical cutting tool loaded in a spindle that allows that tool to be used to cut a workpiece. The method may thus comprise a further step (vi) of cutting a workpiece with the helical cutting tool when the helical cutting tool is being rotated by the spindle of the machine tool. The present method excludes measurement of a helical cutting tool during manufacture of that cutting tools (i.e., when the cutting tool is effectively the workpiece being formed from a metal blank).

According to a further aspect of the present invention, there is provided a machine tool comprising non-contact tool setting apparatus, wherein the machine tool comprises a spindle for retaining a helical cutting tool and a non-contact tool setting apparatus having a transmitter for emitting a light beam and a receiver for receiving the light beam, the receiver generating a beam intensity signal describing the intensity of received light, wherein the machine tool is configured to implement the method according to the first aspect of the present invention.

The invention will now be described, by way of example only, with reference to the accompanying drawings in which;
Figure 1 shows a non-contact tool setter installed on a machine tool carrying a helical cutting tool in its spindle,
Figure 2 shows three helical drill bits having different helix angles,
Figure 3 shows the steps (A) to (E) of a method of the present invention,
Figure 4 shows a fluted end mill having four helical cutting teeth,
Figure 5 shows the measured profiles of the first sections of the four helical cutting teeth of the tool of figure 4 when the tool is new,
Figure 6 shows the measured profiles of the second sections of the four helical cutting teeth of the tool of figure 4 when the tool is new,
Figure 7 shows the measured profiles of the first sections of the four helical cutting teeth of the tool of figure 4 after the tool has been used to cut a workpiece,
Figure 8 shows the measured profiles of the second sections of the four helical cutting teeth of the tool of figure 4 after the tool has been used to cut a workpiece, and
Figure 9 is a photograph of the defects identified from the profile measurements shown in figure 8.

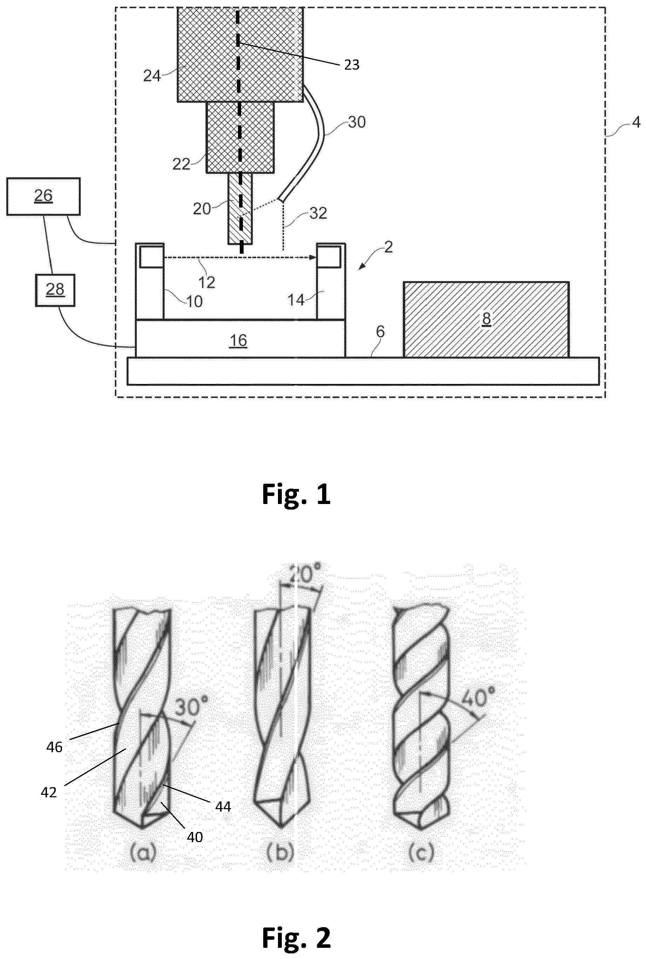

Referring to figure 1, a tool setting apparatus 2 is shown mounted inside the enclosure of a machine tool 4. The machine tool 4 includes a head 24 that can be translated in three orthogonal directions (x,y,z) carrying a rotatable spindle 22. In this example, the spindle 22 is shown holding a helical cutting tool 20. The spindle 22 allows the tool 20 to be rotated about its longitudinal axis 23. A spray of coolant 32 may be supplied via pipe 30 to provide cooling and lubrication when the helical cutting tool 20 is cutting material from the workpiece 8.

The tool setting apparatus 2 comprises a transmitter 10 having a laser diode and suitable optics (not shown) for generating a beam of light 12. A receiver 14 comprising a photodiode (not shown) receives the beam of light 12. The transmitter 10 and receiver 14 are both affixed to a common base 16. This arrangement ensures the transmitter 10 and receiver 14 maintain a fixed spacing and orientation relative to one another. The base 16 is affixed to the bed 6 of the machine tool, although it could be mounted in any appropriate location within the machine tool enclosure. It should also be noted that various alternative structures for mounting the transmitter and receiver could be used. For example, a common housing for the transmitter and receiver could be provided or discrete transmitter and receiver units could be separately mounted to the machine tool.

A tool setting interface 28 is connected to the transmitter 10 and receiver 14. The interface 28 provides electrical power to the transmitter 10 and receiver 14 and also receives a beam intensity signal from the photodiode detector of the receiver 14. The interface 28 comprises an analogue to digital convertor (ADC) that samples the analogue beam intensity signal generated by the receiver 14 and generates a stream of digital beam intensity values. This stream of digital beam intensity values, also termed the beam intensity data, can also be analysed by a digital signal processor (DSP, not shown) within the interface 28. Alternatively, such analysis of the beam intensity data could be performed by the controller 26 or by an external computer (not shown). The interface 28 is also connected to the numerical controller 26 of the machine tool. The numerical controller 26 controls the motion of the translational axes of the machine tool (i.e., so the spindle 22 and tool 20 etc can be moved around in x, y, and z) and also the rotational angle of the spindle 22 (i.e. so the helical cutting tool 20 can be rotated about its longitudinal axis). Other machine tool configurations would, of course, be possible. For example, the table could be moved to provide some or all of the relative motion between the tool 20 and the light beam 12.

The present invention uses the apparatus described above to measure the edge of a helical cutting tool. Referring also to figure 2, three examples are shown of helical drill bits (i.e., a type of helical cutting tool), labelled (a), (b) and (c).

Figure 2(a) show a helical drill bit having a first cutting tooth 40 and a second cutting tooth 42. The cutting teeth 40 and 42 extend in a helical path along the length of the tool. In this example, the cutting teeth have a helix angle of 30°. The first tooth 40 has a first helical edge 44 and the second tooth 42 has a second helical edge 46. Such a tool is commonly called a fluted twist drill, because of the flutes or channels between the teeth. Figures 2(b) and 2(c) show similar helical drill bits, but with smaller and larger helix angles of 20° and 40° respectively. It should be noted that there are many different types of helical cutting tools used for many different machining applications. The number of teeth, the tool dimensions (e.g., radius, length), the material of the tool, and the helix angle etc can all vary from tool to tool.

In use, a helical drill bit of the type illustrated in figure 2 could form the helical cutting tool 20 held by the spindle 22 of the machine tool 4 described with reference to figure 1. In use, the spindle 22 would rotate the helical cutting tool 20 at high speed and the tool would be brought into contact with the workpiece 8 to drill a hole. The helical edges of each tooth of the helical cutting tool 20 would cut and remove material from the workpiece. The helical edges of the cutting tool would thus inevitably wear over time and can also become damaged (e.g., chipped) during use. The measurement of the tool "in-process" allows the tool condition to be checked without the significant machine tool downtime that would occur if the cutting tool had to be removed from the machine tool for an external inspection process to be performed.

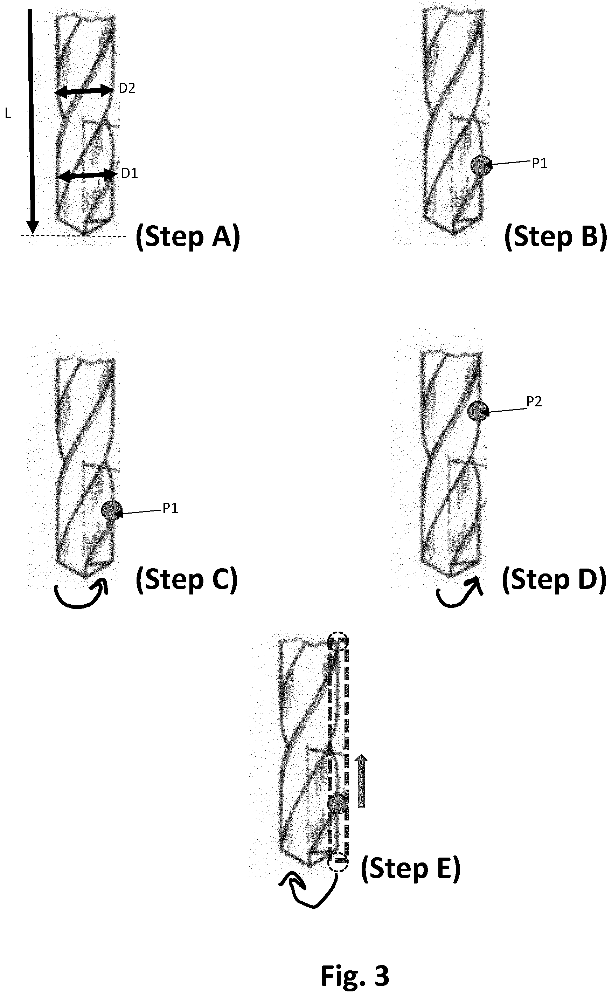

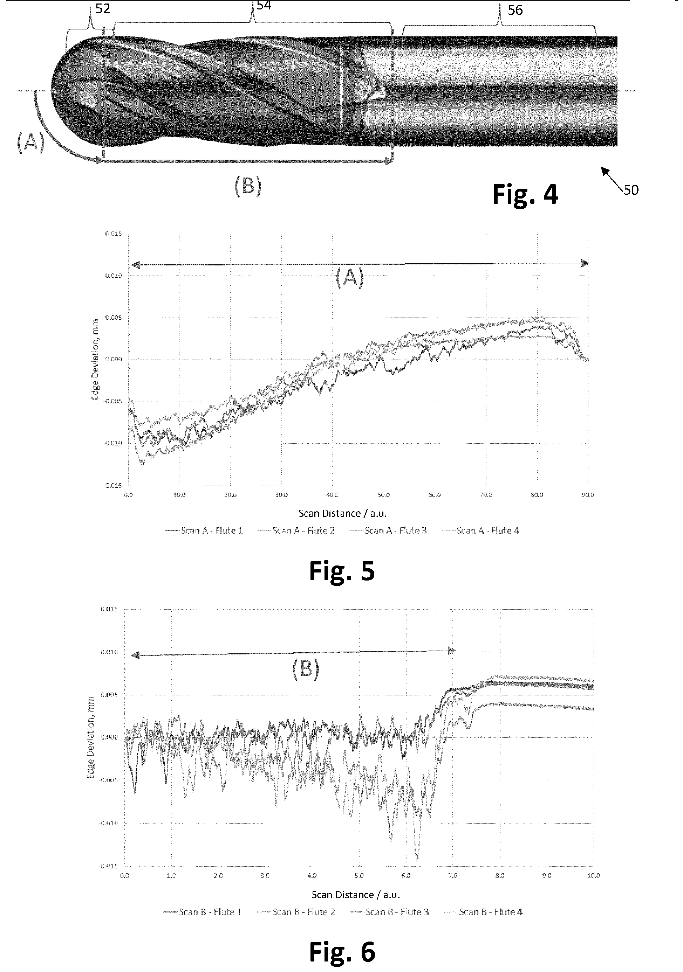

Referring to figure 3, the condition of the helical cutting tool 20 is measured using a method that includes the following steps:
Step (A) - The tool setting apparatus is used to acquire an initial set of tool measurements of the helical cutting tool 20, using conventional tool measurement procedures. For example, tool length (L) and diameter measurements (D1, D2) may be collected whilst the helical cutting tool 20 is rotating at its normal cutting speed. This is done by moving the tool into, or out of, the light beam and recording its position when the light intensity signal crosses a threshold (e.g, 50%). These measurements allow the nominal (lateral) position of the helical cutting tool to be determined (e.g., in x, y, z machine coordinates) and are described in more detail in US6496273.
Step (B) - The tool is then translated (e.g., moved in x,y, z relative to the light beam) so that the light beam is incident on the helical cutting tool 20 at a first longitudinal position (P1) along that tool. The lateral (translated) position of the light beam and cutting tool may be appropriately set using the measurements of step (A) so that the relevant cutting tooth of the helical cutting tool 22 moves into and out of the light beam when rotated about its longitudinal axis.
Step (C) - All translational motion is halted so as to maintain the helical cutting tool at the first longitudinal position (P1). The helical cutting tool 20 is then slowly rotated in the light beam by the spindle 22 whilst the light intensity signal is monitored. The rotational angle of the spindle 22 at which the light intensity signal crosses a predetermined threshold (e.g., 50%) is recorded to provide a measure of the angular position (Θ1) of the cutting edge. This co-called rotational skip measurement allows a first angular position (Θ1) of the cutting edge of the helical cutting tool 20 at the first longitudinal position (P1) to be found.
Step (D) - The process of steps (B) and (C) is repeated to measure a second angular position (Θ2) of the cutting edge of the helical cutting tool 20 at a second longitudinal position (P2) along the helical cutting tool 20. The process may be repeated at additional (e.g., third, fourth, fifth etc) longitudinal positions along the tool.
Step (E) - The measurements of steps (A), (C) and (D) allow a nominal location of the relevant helical edge of the helical cutting tool 20 to be established. In other words, measuring one or more points on the helical edge allows the nominal location of that edge to be calculated using a parameterised model of the cutting tool. If sufficient angular positions along the helical edge are measured, the helix angle of that helical edge may be determined. Alternatively, it is possible to assume the helix angle (or helix angles) of the helical edge conforms to its nominal specification; making this assumption can also reduce the number of angular positions that need to be measured. It would also be possible to use an offline device (e.g., a tool pre-setter) instead of the tool setting apparatus to measure a nominal location of the relevant helical edge of the tool. The tool 20 can then be rotated in synchronisation with lateral motion of the light beam (along the z-axis in this example) to trace the light beam along the helical edge of the cutting tool 20. In other words, translational motion along the z-axis and corresponding rotation of the spindle keeps the helical edge in the light beam. The beam intensity data collected during such a scan can be used to assess the condition of the tool edge, as will be described in more detail with reference to figure 4 to 9 below. Some, or all, of the contextual tool information measured in steps (A), (C) and (D) may also be stored for future use (e.g., for subsequent scans of the same helical edge).

For a helical cutting tool that has a plurality of helical edges, the steps (B) to (E) outlined above can be repeated for each helical edge in turn. However, if the angular separation between the helical edges is known (e.g., from a nominal tool specification) then simply applying an appropriate angular offset to the spindle orientation would allow the light beam to be traced along each of the helical edges of the tool in turn.

Referring next to figure 4 to 9, a tool condition assessment of a 4-flute ball nose end mill tool (VF4MB) sold by the Mitsubishi corporation will be described.

Figure 4 is an image of the helical cutting tool 50. The tool 50 include a cutting tip 52, a fluted material removal region 54 and a plane shaft 56. The four teeth of this tool 50 each have helical profiles that extends from the tool tip along the fluted material removal region 54. In this example, all the helical edges have the same helix angle.

The tool 50 was measured by firstly determining the length and diameter of the tool before performing a series of rotational skip measurements to measure the angular position of each helical edge at a plurality of known positions along the tool (i.e., as described above with reference to figure 3). This then allowed the tool to be rotated in synchronisation with translation of the light beam (along the z-axis) so that the light beam was scanned along a first of the helical edges of the cutting tool. The process was then repeated for the other three helical edges.

Figure 5 show the beam intensity data for each of the four helical edges collected for the cutting tip 52 of the tool prior to the tool being used to perform a cutting procedure. In particular, figure 5 shows the beam intensity data collected when the path A shown in figure 4 was traversed (with coordinated rotation of the tool to ensure the light beam was traced along the required helical edge).

Figure 6 show the beam intensity data for each of the four helical edges in the fluted material removal region 54 of the tool prior to the tool being used to perform a cutting procedure. In particular, figure 6 shows the beam intensity data collected when the path B shown in figure 4 was traversed (with coordinated rotation of the tool to ensure the light beam was traced along the required helical edge).

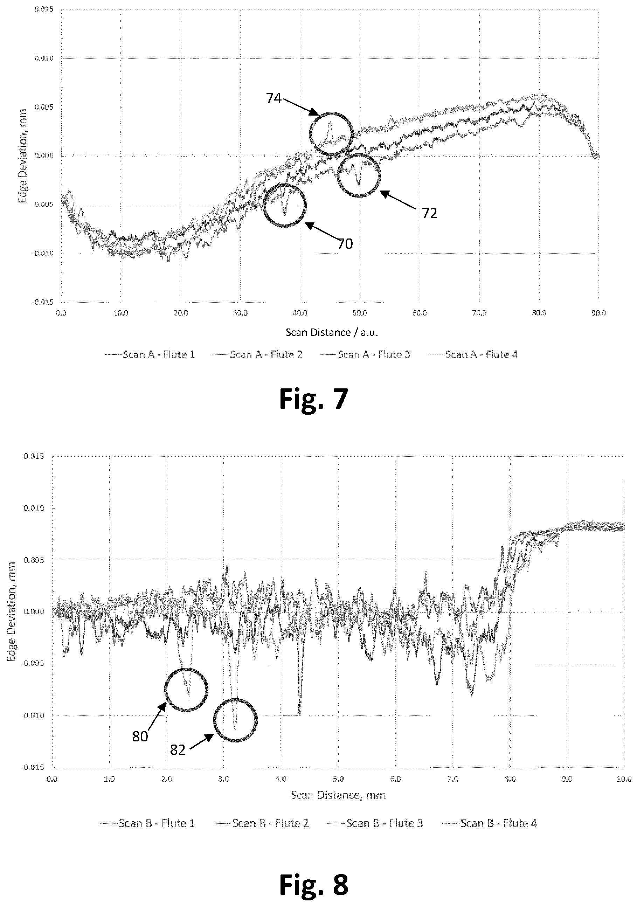

Figures 5 and 6 show some deviations of the helical edges away from the nominal or expected shapes, but overall it can be seen that the helical edges have similar shapes to each other, especially at the cutting tip 52. After using the helical cutting tool 50 to cut material, the measurements used to generate the plots of figures 5 and 6 were repeated to produce figures 7 and 8 respectively.

As shown in figure 7, the peripheral edge of the second flute includes two intensity troughs 70 and 72 that each indicate a chip in the cutting edge. The peak 74 also shows a build-up of material (material-on condition) on the cutting edge of the fourth flute. Such defects in the cutting tip 52 of the tool can lead to a reduction in the surface finish quality and such measurements of tool condition can be used to help decide when a cutting tool should be replaced.

Figure 8 also show the presence of various troughs in the beam intensity data for the fluted material removal region 54 of the helical cutting tool. The intensity troughs 80 and 82 are again chips in the helical edge of the cutting tool.

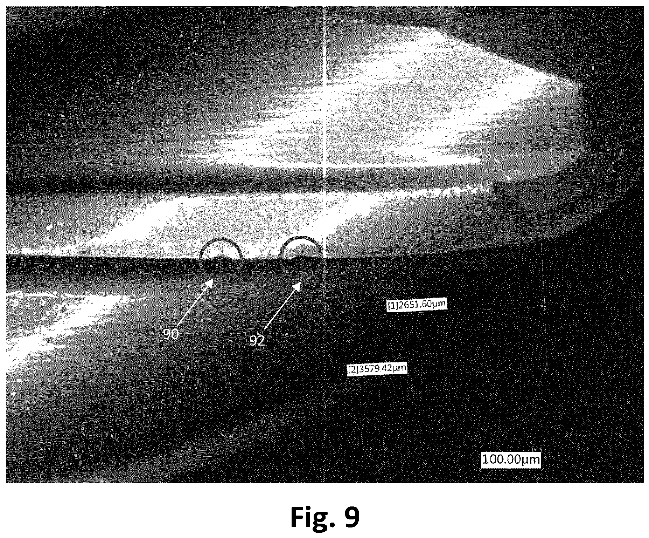

Figure 9 is a photomicrograph of the helical tool edge and show the chips 90 and 92 correspond to the intensity troughs 80 and 82.

The method described herein thus provides a fast and reliable way to measure the helical edge or edges of a helical cutting tool. It should again be noted that the embodiments described herein are just representative examples and the skilled person would be aware of the many variants that could be applied to helical tool inspection.

## Claims

1. A method for assessing a condition of a helical cutting tool (20) having at least a first helical edge (44), the helical cutting tool being installed in a spindle (22) of a machine tool (4) for cutting features in a workpiece (8), the machine tool comprising a non-contact tool setting apparatus (2) having a transmitter (10) for emitting a light beam (12) and a receiver (14) for receiving the light beam, the receiver generating a beam intensity signal describing the intensity of received light, the method comprising the steps of:
(i) measuring a position of one or more points on the first helical edge,
(ii) using the measurements of step (i) to determine the translational and rotational motion of the helical cutting tool relative to the light beam that is required to trace the light beam along the first helical edge,
(iii) imparting the translational and rotational motion calculated in step (ii) to thereby trace the light beam along the first helical edge,
(iv) collecting beam intensity data describing the beam intensity signal that is generated by the receiver as the light beam is traced along the first helical edge during step (iii), and
(v) using the beam intensity data collected in step (iv) to assess the condition of the first helical edge.

2. A method according to any preceding claim, wherein step (i) comprises using the non-contact tool setting apparatus to measure an angular position of the one or more points on the first helical edge.

3. A method according to claim 2, wherein step (i) comprises performing a rotational skip measurement to determine the angular position of each of the one or more points on the first helical edge, each rotational skip measurement comprising the steps of:
(a) translating the helical cutting tool into a position relative to the light beam where rotation of the spindle alone moves the point on the first helical edge into and out of the light beam, and
(b) rotating the spindle and measuring the rotational angle of the spindle at which the beam intensity signal crosses a predetermined threshold.

4. A method according to any one of claims 2 to 3, wherein step (i) comprises measuring the angular position of a plurality of points on the first helical edge, the plurality of points on the first helical edge being longitudinally spaced apart along the helical cutting tool.

5. A method according to any preceding claim, wherein step (i) comprises using the non-contact tool setting apparatus to measure a length or diameter of the helical cutting tool.

6. A method according to any preceding claim, wherein step (ii) comprising inputting the position measurements of step (i) into a parameterised cutting tool model to generate machine tool motion commands that, when executed by the machine tool, will impart the translational and rotational motion of the helical cutting tool relative to the light beam that is required to trace the light beam along the first helical edge.

7. A method according to any preceding claim, wherein the translational motion is synchronised with the rotational motion in step (iii).

8. A method according to any preceding claim, wherein step (iii) comprises imparting continuous translational and rotational motion.

9. A method according to any preceding claim, wherein step (v) comprises the steps of converting beam intensity data into edge deviation data.

10. A method according to any preceding claim, wherein step (v) comprises comparing the beam intensity data collected in step (iv) with corresponding beam intensity data collected previously for the first helical edge of the same helical cutting tool.

11. A method according to any preceding claim, wherein step (v) comprises analysing the collected beam intensity data for localised changes in beam intensity to determine the presence of defects along the first helical edge.

12. A method according to any preceding claim, wherein the first helical edge is formed from a plurality of helical sections having different helix angles.

13. A method according to any preceding claim, wherein the helical cutting tool comprises at least one further helical edge, wherein steps (i) to (v) are repeated for each further helical edge.

14. A method according to any preceding claim, comprising a further step (vi) of cutting a workpiece with the helical cutting tool when the helical cutting tool is being rotated by the spindle of the machine tool.

15. A machine tool (4) comprising a non-contact tool setting apparatus (2), wherein the machine tool comprises a spindle (22) for retaining a helical cutting tool (20) and the non-contact tool setting apparatus having a transmitter (10) for emitting a light beam (12) and a receiver (14) for receiving the light beam, the receiver generating a beam intensity signal describing the intensity of received light, wherein the machine tool is configured to implement the method according to any one of claim 1 to 14.

## Patentansprüche

1. Verfahren zum Beurteilen eines Zustands eines schraubenförmigen Schneidwerkzeugs (20) mit mindestens einer ersten schraubenförmigen Kante (44), wobei das schraubenförmige Schneidwerkzeug in einer Spindel (22) einer Werkzeugmaschine (4) zum Schneiden von Merkmalen in einem Werkstück (8) installiert ist, wobei die Werkzeugmaschine eine berührungslose Werkzeugeinstellvorrichtung (2) mit einem Sender (10) zum Emittieren eines Lichtstrahls (12) und einem Empfänger (14) zum Empfangen des Lichtstrahls umfasst, wobei der Empfänger ein Strahlintensitätssignal erzeugt, das die Intensität des empfangenen Lichts beschreibt, wobei das Verfahren die folgenden Schritte umfasst:
(i) Messen einer Position eines oder mehrerer Punkte auf der ersten schraubenförmigen Kante,
(ii) Verwenden der Messungen von Schritt (i), um die Translations- und Rotationsbewegung des schraubenförmigen Schneidwerkzeugs relativ zu dem Lichtstrahl zu bestimmen, die erforderlich ist, um den Lichtstrahl entlang der ersten schraubenförmigen Kante zu verfolgen,
(iii) Übermitteln der in Schritt (ii) berechneten Translations- und Rotationsbewegung, um dadurch den Lichtstrahl entlang der ersten schraubenförmigen Kante zu verfolgen,
(iv) Sammeln von Strahlintensitätsdaten, die das Strahlintensitätssignal beschreiben, das durch den Empfänger erzeugt wird, wenn der Lichtstrahl entlang der ersten schraubenförmigen Kante während Schritt (iii) verfolgt wird, und
(v) Verwenden der in Schritt (iv) gesammelten Strahlintensitätsdaten, um den Zustand der ersten schraubenförmigen Kante zu beurteilen.

2. Verfahren nach einem der vorhergehenden Ansprüche, wobei Schritt (i) das Verwenden der berührungslosen Werkzeugeinstellvorrichtung umfasst, um eine Winkelposition des einen oder der mehreren Punkte auf der ersten schraubenförmigen Kante zu messen.

3. Verfahren nach Anspruch 2, wobei Schritt (i) das Durchführen einer Rotationssprungmessung umfasst, um die Winkelposition jedes des einen oder der mehreren Punkte auf der ersten schraubenförmigen Kante zu bestimmen, wobei jede Rotationssprungmessung die folgenden Schritte umfasst:
(a) Verschieben des schraubenförmigen Schneidwerkzeugs in eine Position relativ zu dem Lichtstrahl, wobei die Rotation der Spindel alleine den Punkt auf der ersten schraubenförmigen Kante in den und aus dem Lichtstrahl bewegt, und
(b) Rotieren der Spindel und Messen des Rotationswinkels der Spindel, bei dem das Strahlintensitätssignal einen vorbestimmten Schwellenwert kreuzt.

4. Verfahren nach einem der Ansprüche 2 bis 3, wobei Schritt (i) das Messen der Winkelposition einer Vielzahl von Punkten auf der ersten schraubenförmigen Kante umfasst, wobei die Vielzahl von Punkten auf der ersten schraubenförmigen Kante in Längsrichtung entlang des schraubenförmigen Schneidwerkzeugs beabstandet ist.

5. Verfahren nach einem der vorhergehenden Ansprüche, wobei Schritt (i) das Verwenden der berührungslosen Werkzeugeinstellvorrichtung umfasst, um eine Länge oder einen Durchmesser des schraubenförmigen Schneidwerkzeugs zu messen.

6. Verfahren nach einem der vorhergehenden Ansprüche, wobei Schritt (ii) das Eingeben der Positionsmessungen von Schritt (i) in ein parametrisiertes Schneidwerkzeugmodell umfasst, um Werkzeugmaschinenbewegungsbefehle zu erzeugen, die, wenn sie durch die Werkzeugmaschine ausgeführt werden, die Translations- und Rotationsbewegung des schraubenförmigen Schneidwerkzeugs relativ zu dem Lichtstrahl übermitteln, die erforderlich ist, um den Lichtstrahl entlang der ersten schraubenförmigen Kante zu verfolgen.

7. Verfahren nach einem der vorhergehenden Ansprüche, wobei die Translationsbewegung mit der Rotationsbewegung in Schritt (iii) synchronisiert ist.

8. Verfahren nach einem der vorhergehenden Ansprüche, wobei Schritt (iii) das Übermitteln einer kontinuierlichen Translations- und Rotationsbewegung umfasst.

9. Verfahren nach einem der vorhergehenden Ansprüche, wobei Schritt (v) die Schritte zum Umwandeln von Strahlintensitätsdaten in Kantenabweichungsdaten umfasst.

10. Verfahren nach einem der vorhergehenden Ansprüche, wobei Schritt (v) das Vergleichen der in Schritt (iv) gesammelten Strahlintensitätsdaten mit entsprechenden Strahlintensitätsdaten umfasst, die zuvor für die erste schraubenförmige Kante desselben schraubenförmigen Schneidwerkzeugs gesammelt wurden.

11. Verfahren nach einem der vorhergehenden Ansprüche, wobei Schritt (v) das Analysieren der gesammelten Strahlintensitätsdaten auf lokalisierte Änderungen der Strahlintensität umfasst, um das Vorhandensein von Defekten entlang der ersten schraubenförmigen Kante zu bestimmen.

12. Verfahren nach einem der vorhergehenden Ansprüche, wobei die erste schraubenförmige Kante aus einer Vielzahl von schraubenförmigen Abschnitten mit unterschiedlichen Steigungswinkeln gebildet wird.

13. Verfahren nach einem der vorhergehenden Ansprüche, wobei das schraubenförmige Schneidwerkzeug mindestens eine weitere schraubenförmige Kante umfasst, wobei die Schritte (i) bis (v) für jede weitere schraubenförmige Kante wiederholt werden.

14. Verfahren nach einem der vorhergehenden Ansprüche, umfassend einen weiteren Schritt (vi) zum Schneiden eines Werkstücks mit dem schraubenförmigen Schneidwerkzeug, wenn das schraubenförmige Schneidwerkzeug durch die Spindel der Werkzeugmaschine rotiert wird.

15. Werkzeugmaschine (4), umfassend eine berührungslose Werkzeugeinstellvorrichtung (2), wobei die Werkzeugmaschine eine Spindel (22) zum Halten eines schraubenförmigen Schneidwerkzeugs (20) umfasst und die berührungslose Werkzeugeinstellvorrichtung einen Sender (10) zum Emittieren eines Lichtstrahls (12) und einen Empfänger (14) zum Empfangen des Lichtstrahls aufweist, wobei der Empfänger ein Strahlintensitätssignal erzeugt, das die Intensität des empfangenen Lichts beschreibt, wobei die Werkzeugmaschine konfiguriert ist, um das Verfahren nach einem der Ansprüche 1 bis 14 zu implementieren.

## Revendications

1. Un procédé pour évaluer un état d'un outil de coupe hélicoïdal (20) ayant au moins un premier bord hélicoïdal (44), l'outil de coupe hélicoïdal étant installé dans une broche (22) d'une machine-outil (4) pour couper des entités dans une pièce à usiner (8), la machine-outil comprenant un appareil de réglage d'outil sans contact (2) ayant un émetteur (10) pour émettre un faisceau lumineux (12) et un récepteur (14) pour recevoir le faisceau lumineux, le récepteur générant un signal d'intensité de faisceau décrivant l'intensité de la lumière reçue, le procédé comprenant les étapes consistant à :
(i) mesurer une position d'un ou plusieurs points sur le premier bord hélicoïdal,
(ii) utiliser les mesures de l'étape (i) pour déterminer le mouvement de translation et de rotation de l'outil de coupe hélicoïdal par rapport au faisceau lumineux nécessaire pour tracer le faisceau lumineux le long du premier bord hélicoïdal,
(iii) communiquer le mouvement de translation et de rotation calculé à l'étape (ii) pour ainsi tracer le faisceau lumineux le long du premier bord hélicoïdal,
(iv) collecter des données d'intensité du faisceau décrivant le signal d'intensité du faisceau généré par le récepteur lorsque le faisceau lumineux est tracé le long du premier bord hélicoïdal au cours de l'étape (iii), et
(v) utiliser les données d'intensité de faisceau collectées à l'étape (iv) pour évaluer l'état du premier bord hélicoïdal.

2. Un procédé selon l'une quelconque des revendications précédentes, dans lequel l'étape (i) comprend l'utilisation de l'appareil de réglage d'outil sans contact pour mesurer une position angulaire du ou des points sur le premier bord hélicoïdal.

3. Un procédé selon la revendication 2, dans lequel l'étape (i) comprend la réalisation d'une mesure de saut de rotation pour déterminer la position angulaire de chacun des un ou plusieurs points sur le premier bord hélicoïdal, chaque mesure de saut de rotation comprenant les étapes consistant à :
(a) translater l'outil de coupe hélicoïdal dans une position par rapport au faisceau lumineux où la rotation de la broche seule déplace le point sur le premier bord hélicoïdal dans et hors du faisceau lumineux, et
(b) faire tourner la broche et mesurer l'angle de rotation de la broche auquel le signal d'intensité du faisceau franchit un seuil prédéterminé.

4. Un procédé selon l'une quelconque des revendications 2 à 3, dans lequel l'étape (i) comprend la mesure de la position angulaire d'une pluralité de points sur le premier bord hélicoïdal, la pluralité de points sur le premier bord hélicoïdal étant espacés longitudinalement le long de l'outil de coupe hélicoïdal.

5. Un procédé selon l'une quelconque des revendications précédentes, dans lequel l'étape (i) comprend l'utilisation de l'appareil de réglage d'outil sans contact pour mesurer une longueur ou un diamètre de l'outil de coupe hélicoïdal.

6. Un procédé selon l'une quelconque des revendications précédentes, dans lequel l'étape (ii) comprend l'entrée des mesures de position de l'étape (i) dans un modèle d'outil de coupe paramétré pour générer des commandes de mouvement de machine-outil qui, lorsqu'elles sont exécutées par la machine-outil, communiqueront le mouvement de translation et de rotation de l'outil de coupe hélicoïdal par rapport au faisceau lumineux qui est nécessaire pour tracer le faisceau lumineux le long du premier bord hélicoïdal.

7. Un procédé selon l'une quelconque des revendications précédentes, dans lequel le mouvement de translation est synchronisé avec le mouvement de rotation à l'étape (iii).

8. Un procédé selon l'une quelconque des revendications précédentes, dans lequel l'étape (iii) comprend la transmission d'un mouvement de translation et de rotation continu.

9. Un procédé selon l'une quelconque des revendications précédentes, dans lequel l'étape (v) comprend les étapes de conversion des données d'intensité de faisceau en données de déviation de bord.

10. Un procédé selon l'une quelconque des revendications précédentes, dans lequel l'étape (v) comprend la comparaison des données d'intensité de faisceau collectées à l'étape (iv) avec des données d'intensité de faisceau correspondantes collectées précédemment pour le premier bord hélicoïdal du même outil de coupe hélicoïdal.

11. Un procédé selon l'une quelconque des revendications précédentes, dans lequel l'étape (v) comprend l'analyse des données d'intensité de faisceau collectées pour des changements localisés dans l'intensité du faisceau afin de déterminer la présence de défauts le long du premier bord hélicoïdal.

12. Un procédé selon l'une quelconque des revendications précédentes, dans lequel le premier bord hélicoïdal est formé à partir d'une pluralité de sections hélicoïdales comportant des angles d'hélice différents.

13. Un procédé selon l'une quelconque des revendications précédentes, dans lequel l'outil de coupe hélicoïdal comprend au moins un autre bord hélicoïdal, dans lequel les étapes (i) à (v) sont répétées pour chaque autre bord hélicoïdal.

14. Un procédé selon l'une quelconque des revendications précédentes, comprenant une étape supplémentaire (vi) consistant à couper une pièce à usiner avec l'outil de coupe hélicoïdal lorsque l'outil de coupe hélicoïdal est mis en rotation par la broche de la machine-outil.

15. Une machine-outil (4) comprenant un appareil de réglage d'outil sans contact (2), dans laquelle la machine-outil comprend une broche (22) pour retenir un outil de coupe hélicoïdal (20) et l'appareil de réglage d'outil sans contact ayant un émetteur (10) pour émettre un faisceau lumineux (12) et un récepteur (14) pour recevoir le faisceau lumineux, le récepteur générant un signal d'intensité de faisceau décrivant l'intensité de la lumière reçue, dans lequel la machine-outil est configurée pour mettre en œuvre le procédé selon l'une quelconque des revendications 1 à 14.
